# EUROPÄISCHE PATENTSCHRIFT

(11) **EP 3 865 432 B1**
(45) Veröffentlichungstag und Bekanntmachung des Hinweises auf die Patenterteilung: **04.03.2026**
(21) Anmeldenummer: 21156093.3
(22) Anmeldetag: 09.02.2021
(51) Int. Cl.: B65G 21/00, B65G 47/66, B65G 15/00, B65G 15/12, B65G 15/14

(54) **BANDKÖRPER MIT EINEM EINGREIFSCHUTZ**
BAND BODY WITH A PINCH PROTECTION
CORPS DE BANDE AVEC UNE PROTECTION ANTI-PINCEMENT

(30) Priorität: 11.02.2020 DE 102020103493
(43) Veröffentlichungstag der Anmeldung: 18.08.2021
(73) Patentinhaber: WIPOTEC GmbH, 67657 Kaiserslautern (DE)
(72) Erfinder: Schmidt, Kay-Eric, 67678 Mehlingen (DE); Walter, Markus Jochen, 67705 Trippstadt (DE)
(74) Vertreter: Eder Schieschke & Partner mbB

(56) Entgegenhaltungen:
- EP-A1- 3 020 659
- EP-A2- 1 329 399
- EP-A2- 3 343 188
- FR-A1- 2 842 793
- FR-B1- 2 842 793
- US-A1- 2006 144 679

## Beschreibung

Die vorliegende Erfindung betrifft einen Bandkörper mit einem Eingreifschutz, um im Betrieb die Entstehung eines für menschliche Gliedmaßen gefährlichen Klemmspaltes zu vermeiden.

Bei Transportbandsystemen besteht die Gefahr, dass z.B. ein Finger oder eine Hand eines Bedieners, oder auch ein Kleidungsstück wie beispielsweise eine Krawatte, ein Schal oder ein Ärmel, in einen Klemmspalt eingezogen und gequetscht wird. Der Klemmspalt kann z.B. zwischen einem feststehenden und einem beweglichen, insbesondere rotierenden Teil entstehen. Denkbar ist insbesondere auch der Fall, dass ein Klemmspalt zwischen einem mit dem Transportbandsystem transportierten Produkt und einem feststehenden oder einem beweglichen Teil des Transportbandsystems, wie insbesondere einer Rolle oder einem Band, entsteht. Unter Klemmspalt soll daher im Rahmen dieser Anmeldung ein für den Betrieb eines Transportbandsystems gefährlicher Spalt verstanden werden, der durch einen erfindungsgemäßen Eingreifschutz auf ein den gängigen Sicherheitsnormen entsprechendes zulässiges Maß zu verkleinern ist.

Der (ggf. nachträgliche) Anbau eines Eingreifschutzes an ein Transportbandsystem ist mit erhöhtem (materiellem und zeitlichem) Aufwand verbunden. Außerdem werden häufig verlierbare Befestigungsschrauben verwendet, was bei dem Transport unverpackter Lebensmittel in der Lebensmittelindustrie oder auch im Pharmabereich unerwünscht ist. Wird der Eingreifschutz im Laufe der Lebensdauer der Maschine entfernt, z.B. beim Austausch eines defekten Förderbands oder bei (ggf. häufiger) Reinigung, dann könnte der Eingreifschutz vor der erneuten Inbetriebnahme vergessen oder gar vorsätzlich weggelassen werden, wodurch die ursprüngliche Betriebssicherheit des Transportsystems nicht mehr gewährleistet ist.

Übliche Maßnahmen des Eingreifschutzes an einem Bandkörper eines Transportbandsystems bauen mehr oder weniger tief in Längsrichtung bzw. Förderrichtung X auf, so dass am Übergang zwischen zwei hintereinander liegenden Transportbändern eine mehr oder weniger große Lücke verbleiben muss, wenn eine Berührung sicher vermieden werden soll. Dies ist speziell bei Waagen, insbesondere bei selbsttätigen Waagen, der Fall, weil die Wägeplattform, und somit das Wägetransportband, keinen störenden Kraftnebenschluss zu benachbarten "Festlandteilen" aufweisen soll.

Um auch kleine (kurze) Produkte möglichst ohne ein Unruhe auf der Plattform erzeugendes Holpern über den Übergangsspalt zwischen zwei hintereinander liegenden Transportbändern transportieren zu können, muss die Spaltlänge in Transportrichtung jedoch so kurz wie möglich sein. Folglich muss der Eingreifschutz in Transportrichtung so kurz wie möglich sein, bzw. möglichst gar keinen Platz in Transportrichtung beanspruchen.

Der anstelle des Klemmspaltes zulässige Restspalt zwischen Eingreifschutz und drehendem Teil bzw. Transportband darf laut Sicherheitsnormen meist nicht größer als wenige Millimeter sein, da sonst Finger eingezogen werden könnten. Bevorzugt ist er kleiner oder gleich 5 mm.

Aus der EP 3 020 659 A1 ist ein Fördermodul mit gegossener Umlenk-Einbaugruppe bekannt, bei der ein Rollenhalter und ein Eingreifschutz einstückig ausgebildet sind. Die gemeinsame Einheit aus Rollenhalter und Eingreifschutz ist in einen als Strangpressprofil ausgebildeten Aluminiumrahmen in Längsrichtung bzw. Förderrichtung einschieb- und fixierbar, wodurch sich auch die Bandspannung einstellen lässt. Die EP 3 020 659 A1 offenbart die Merkmale des Oberbegriffs des Anspruchs 1.

Aufgabe der Erfindung war es daher, einen einfachen Eingreifschutz anzubieten, der die vorgenannten Nachteile überwindet und die Betriebssicherheit eines Transportbandsystems bezüglich der Vermeidung eines Klemmspalts sicherstellt.

Die Aufgabe wird gelöst durch einen Bandkörper mit einem Eingreifschutz nach Anspruch 1 und einem Inspektionsgerät nach Anspruch 12.

Die Erfindung geht von der Erkenntnis aus, einen wirksamen Eingreifschutz dadurch ausbilden zu können, dass ein den Eingreifschutz bildendes Element einstückig mit dem Rollenhalter ausgebildet ist. Dadurch kann der Eingreifschutz zu einem integralen Bestandteil des Rollenhalters werden. Die versehentliche oder absichtliche Inbetriebnahme des Transportbands ohne Eingreifschutz wird dadurch erschwert oder verhindert.

Der Eingreifschutz dient zur Abdeckung eines Klemmspalts, der beim Betrieb eines Bandförderers zwischen zwei Komponenten entstehen könnte, wobei eine der beiden Komponenten das Förderband eines Bandförderers ist. Ein solcher Bandförderer erstreckt sich in einer Förderrichtung X, einer orthogonal dazu verlaufenden Querrichtung Y und einer orthogonal zu diesen beiden Richtungen verlaufenden Höhenrichtung Z. Das Förderband wird mittels einer Rolle umgelenkt, die um eine in Querrichtung Y verlaufende Rollenachse drehbar ist und von einem Rollenhalter gehalten wird. Der Rollenhalter ist am Bandkörper befestigbar. Um beispielsweise das Förderband zu wechseln oder die Bandspannung zu verändern, kann der Rollenhalter vorübergehend vom Bandkörper gelöst und sogar entfernt werden. Die anschließende Wiederinbetriebnahme ist natürlich nur möglich, wenn der Rollenhalter wieder am Bandkörper befestigt ist.

Erfindungsgemäß ist der Eingreifschutz des erfindungsgemäßen Bandkörpers einstückig mit dem Rollenhalter ausgebildet (einteilige Lösung). Wird der Rollenhalter dann vorübergehend vom Bandkörper entfernt und anschließend wieder montiert, wird auch der am Rollenhalter angeordnete Eingreifschutz gleichzeitig wieder montiert. Da der Bandförderer nur mit montiertem Rollenhalter betriebsbereit ist, damit aber zugleich auch der Eingreifschutz ordnungsgemäß angebracht ist, kann die Inbetriebnahme des Bandförderers ohne Eingreifschutz vorteilhafterweise nicht erfolgen.

Der im Betrieb zu vermeidende Klemmspalt kann insbesondere dort entstehen, wo die Rolle das Förderband (meistens um 180°) umlenkt. Das Förderband hat während der Umlenkung in Bezug auf die Rollenachse einen äußeren Radius, der sich aus dem Radius der Rolle zuzüglich der Dicke des Förderbandes ergibt. Dieser äußere Radius sei im Weiteren auch mit "Bandradius" bezeichnet. In dem Bereich, der sich in radialer Richtung außen an den Bandradius anschließt, könnte im Betrieb ein Klemmspalt entstehen, beispielsweise zwischen dem Förderband und einem Produkt, welches gerade an dem von der Rolle umgelenkten Förderband eingezogen wird. Der Abschnitt des Förderbandes, der sich beim Umlenken um die Rolle auf Höhe der Rollenachse befindet, stellt die weiteste Erstreckung des Förderbandes in X-Richtung dar und soll im Weiteren auch als "Bandende" bezeichnet sein.

Für einen wirksamen Eingreifschutz ist es erforderlich, in dem Klemmspalt ein Schutzelement als Teil des Eingreifschutzes anzuordnen, welches den potentiellen Klemmspalt ausfüllt bzw. auf das zulässige Maß der einschlägigen Sicherheitsnormen reduziert. Das Schutzelement erstreckt sich dazu radial außerhalb des Bandradius' in Querrichtung Y in die Klemmzone. Es füllt dadurch den Raum des potentiellen Klemmspalts aus und bildet stattdessen zwischen sich und dem von der Rolle umgelenkten Förderband einen deutlich geringeren und normtechnisch zulässigen Restspalt G aus, der zum störungsfreien Betrieb des Förderbandes ausreicht und zugleich das Einziehen menschlicher Gliedmaßen, Kleidungsstücke etc. sicher verhindert.

Das Schutzelement kann sich dabei mit einem dem Förderband zugewandten Abschnitt entlang eines um die Rollenachse verlaufenden Kreisbogens erstrecken. Dies verleiht dem Schutzelement eine gewisse Steifigkeit und Stabilität. Zugleich schützt ein solches Schutzelement, welches das Förderband entlang der Rolle in Umfangsrichtung nach Art einer Schale oder Einhausung teilweise einfasst, das Förderband vor ungewolltem Kontakt, Verschmutzung, Abrieb, Verschleiß oder gar Beschädigung. Die Schale oder Einhausung kann dabei auch das Bandende umlaufen bzw. sich durch eine die Rollenachse enthaltende X-Y-Ebene hindurch erstrecken. Das Schutzelement erstreckt sich in diesem Fall in X-Richtung etwas weiter als das von der Rolle umgelenkte Förderband.

Der Vorteil des besonders guten Schutzes des Förderbandes wird in diesem Fall jedoch erkauft durch einen größeren Mindestabstand, der zwischen dem Bandkörper und einem in Förderrichtung X beispielsweise angrenzenden weiteren Bandkörper eingehalten werden muss, da sich das Schutzelement auch auf Höhe der Rollenachse zwischen dem Bandkörper und dem benachbarten weiteren Bandkörper erstreckt. Die beiden Bandkörper lassen sich daher aufgrund des dazwischenliegenden Schutzelements in X-Richtung nicht beliebig nahe hintereinander anordnen, so dass der Übergabespalt zwischen zwei hintereinander liegenden Bandkörpern zusätzlich und nachteilig vergrößert wird. (Der Übergabespalt zwischen zwei hintereinander liegenden Bandkörpern entsteht an den aneinander angrenzenden beiden Bandenden aufgrund der Rollenkrümmung und des dieser Krümmung jeweils folgenden Förderbandes, so dass die Förderebene der beiden hintereinander liegenden Bandkörper durch einen "Zwickel" unterbrochen ist.) Je nach Rollendurchmesser im Verhältnis zu den Packungsabmessungen besteht die Gefahr, dass das Produkt bei der Übergabe in den Übergabespalt hineinkippt. Eine kontrollierte Weiterförderung wird dadurch erheblich erschwert).

Eine alternative Ausführungsform des Schutzelements sieht zur Vermeidung dieses Problems daher vor, dass sich das Schutzelement nicht auf Höhe der Rollenachse erstreckt, sondern nur oberhalb und/oder unterhalb dieser Ebene. Das Bandende ist dann in X-Richtung nicht vom Schutzelement abgedeckt. Dadurch ist es möglich, zwei in Förderrichtung X hintereinander liegende Bandkörper bzw. deren Bandenden in möglichst minimalem X-Abstand zueinander anzuordnen, um den Übergabespalt möglichst gering zu halten. Da das Schutzelement zugleich nicht in den Förderweg oberhalb des Förderbandes hineinragen darf, liegt es sowohl außerhalb des Bandradius' als auch in einem Bereich, der mit Blick auf einen Querschnitt senkrecht zur Rollenachse
a) in Höhenrichtung Z begrenzt ist von einer die Rollenachse enthaltenden X-Y-Ebene und einer im Abstand des Bandradius' oberhalb oder unterhalb dieser Ebene liegenden, dazu parallelen weiteren Ebene (wobei die oberhalb liegende Ebene die von der Oberseite des Förderbands gebildete Förderebene darstellt), und
b) in Förderrichtung X auf der dem Bandende zugewandten Seite einer die Rollenachse enthaltenden Y-Z-Ebene liegt.

Nicht ausgeschlossen ist dadurch, dass sich das Schutzelement oberhalb oder unterhalb der Rollenachse in Förderrichtung X über das Bandende hinaus erstreckt. In diesem Fall kann das Schutzelement gleichzeitig auch einen Eingreifschutz für einen in Förderrichtung X an den Bandkörper angrenzenden weiteren Bandkörper ausbilden. Zusätzlich zu dem zuvor beschriebenen Restspalt G, den das Schutzelement dann mit dem Förderband des "eigenen" Bandkörpers ausbildet, kann es zugleich einen vergleichbaren geringen Spalt mit dem Förderband F' des angrenzenden Bandkörpers ausbilden, wodurch die zusätzliche Anordnung eines Eingreifschutzes für den angrenzenden Bandkörper überflüssig wird. Vorzugsweise ist das Schutzelement dafür bezüglich einer das Bandende enthaltenden Y-Z-Ebene symmetrisch ausgebildet. Bei einem zu einer Waage gehörenden Transportbandsystem ist ein derartiges Schutzelement bevorzugt an den zu- oder abführenden Bändern vor bzw. hinter der Waage angeordnet, und nicht am Bandkörper des Wägebands selbst, um die Vorlast zu reduzieren und dadurch Einschwingvorgänge der Waage zu verkürzen.

Alternativ kann es vorteilhaft sein, einen Bandkörper mit einem nur ihm dienenden Eingreifschutz zu versehen. Mehrere vergleichbare Bandkörper lassen sich dann in Förderrichtung hintereinander anordnen, ohne dass das Schutzelement eines Eingreifschutzes auch zur Beseitigung der Klemmgefahr am benachbarten Bandkörper zuständig wäre. Die Anordnung mehrerer solcher "autarker" Bandkörper hintereinander ist dann einfacher. In diesem Fall erstreckt sich das Schutzelement in Förderrichtung X vorzugsweise nicht über das Bandende hinaus.

Um den Übergabespalt weiter zu reduzieren, ist nach einer vorteilhaften Ausführungsform der Erfindung vorgesehen, dass ein als Stützfläche dienender Abschnitt des Schutzelements einen Teil der Förderebene ausbildet, um die Übergabe bzw. Weiterförderung der Produkte vom Bandkörper auf eine angrenzende Fördereinrichtung möglichst ruckfrei zu gestalten. Dadurch wird das über die Rolle hinweggeförderte Produkt im Bereich des Übergabespalts noch weiter gestützt, während das Förderband bereits der Krümmung der Rolle folgt und aus der Förderebene herausgelenkt wird. Die Stützfläche erstreckt sich dazu in X-Y-Richtung in der Förderebene und "übernimmt" quasi entlang ihrer Länge in X-Richtung das vom Förderband kommende Produkt. Dadurch wird das Kippen von Produkten in den Übergabespalt bei der Übergabe vorteilhaft verhindert.

Um den Eingreifschutz des erfindungsgemäßen Bandkörpers auch an Bandkörpern mit unterschiedlich breiten Förderbändern einsetzen zu können, ist nach einer weiteren Ausführungsform der Erfindung vorgesehen, dass das Schutzelement des Eingreifschutzes in Y-Richtung modular erweiterbar ist. Einzelne Module können dazu in Y-Richtung ineinander steckbar oder auf andere Weise miteinander befestigbar sein (anschrauben, verrasten, einstecken), um insgesamt die erforderliche Breite in Querrichtung Y zu erreichen, die die vollständige Abdeckung eines möglichen Klemmspaltes erfordert.

Zweckmäßigerweise erstreckt sich das Schutzelement, ausgehend vom vorgenannten Halteabschnitt, in Querrichtung Y frei auskragend über das von der Rolle geführte Förderband hinweg, vorzugsweise mit konstantem Querschnitt. Da das Schutzelement in diesem Fall nur einseitig am Halteabschnitt befestigt ist (oder dort einstückig an diesen anschließt), kann auf der dem Halteabschnitt in Querrichtung Y gegenüberliegenden Seite der Rolle das Förderband bei Bedarf in Querrichtung Y von der Rolle heruntergenommen werden, ohne dass dies dort durch einen Abschnitt des Eingreifschutzes behindert würde. Dadurch wird der Wechsel des Förderbandes oder auch das Entfernen des Eingreifschutzes samt Rollenhalter vom Bandkörper erheblich erleichtert.

Nach einer vorteilhaften Ausführungsform ist der Eingreifschutz symmetrisch zu einer die Rollenachse enthaltenden X-Y-Ebene ausgebildet. So lässt er sich (bei Bedarf um 180° gedreht) wahlweise von beiden Seiten in Querrichtung Y am Rollenhalter oder am Rahmen eines Bandkörpers befestigen, ohne dass für beide Fälle jeweils ein eigener Eingreifschutz gefertigt und vorrätig gehalten werden muss. Zweckmäßigerweise sind geeignete Befestigungsmittel am Rahmen eines Bandkörpers ebenfalls symmetrisch oder jedenfalls zur Aufnahme eines symmetrisch gestalteten Eingreifschutzes ausgebildet. Durch Verwendung solcher "Gleichteile" lässt sich die Teilevielfalt vorteilhaft reduzieren, zugunsten auch der Lagerkosten.

Um das Schutzelement als Teil des Eingreifschutzes am Bandkörper anordnen zu können kann sich ein Halteabschnitt des Eingreifschutzes seitlich neben der vom Rollenhalter aufgenommenen Rolle erstrecken, um jenseits des Bandradius' das Schutzelement zu tragen, welches den Klemmspalt ausfüllt und auf den Restspalt reduziert. Zugleich dient der Halteabschnitt auch zur gleichzeitigen Befestigung des Rollenhalters an einem Rahmen des Bandkörpers.

Ein erfindungsgemäßer Bandkörper umfasst wenigstens einen Eingreifschutz der zuvor beschriebenen Art. Der Eingreifschutz ist dazu Teil des Rollenhalters. Der Rollenhalter seinerseits ist am Bandkörper lösbar befestigt, sodass der Eingreifschutz bei vorübergehender Demontage des Rollenhalters mit entfernt wird und vor der Wiederinbetriebnahme, wenn der Rollenhalter wieder montiert wird, gleichzeitig ebenfalls wieder am Bandkörper befestigt wird. Die versehentliche Inbetriebnahme des Bandförderers ohne Eingreifschutz wird dadurch vorteilhaft verhindert.

Der Bandkörper umfasst zur Befestigung des Rollenhalters einen Rahmen, der sich zwischen zwei in Förderrichtung X voneinander beabstandeten Rollen erstreckt, die jeweils zur Umlenkung des Förderbandes, bei Bedarf auch zu dessen Antrieb, dienen. Bevorzugt erstreckt sich ein Abschnitt des Rahmens dabei auch zwischen dem Obertrum und dem Untertrum des Förderbandes. Der Rahmen kann dazu dienen, das Förderband im Bereich zwischen den beiden Rollen in Höhenrichtung Z abzustützen. Insbesondere dient der Rahmen dazu, die beiden Rollen in einem vorgegebenen und vorzugsweise zueinander einstellbaren Abstand in X-Richtung anzuordnen, in welchem die Rollen mit ihrem jeweiligen Rollenhalter am Rahmen befestigt werden.

Zur Befestigung des Rollenhalters am Rahmen kann der Rahmen beispielsweise in Querrichtung Y von einer Ausnehmung durchsetzt sein. Die Ausnehmung weist eine oder mehrere Kontaktflächen auf, die mit einem in die Ausnehmung eingesetzten Abschnitt des Rollenhalters zusammenwirken und dadurch die Position des Rollenhalters relativ zum Rahmen bezüglich einer oder mehrerer der Raumrichtungen X, Y, Z festlegen. Bevorzugt ist der Rollenhalter im Rahmen einer in Querrichtung Y verlaufenden Einsetzbewegung in die Ausnehmung des Rahmens einsetzbar, um dadurch den Rollenhalter mit dem Rahmen in Eingriff zu bringen. Erfindungsgemäß weist der Rollenhalter einen in Querrichtung Y ausgebildeten Vorsprung auf, der in Querrichtung Y, also von der Seite des Bandkörpers her, in eine dazu komplementär ausgebildete Ausnehmung im Rahmen, einsetzbar ist. Der Rollenhalter kann außerdem Anschlagflächen aufweisen, die mit dem Rahmen zusammenwirken und die Y-Position des Rollenhalters relativ zum Rahmen definieren.

Bevorzugt ist eine im Rahmen des Bandkörpers vorgesehene Ausnehmung zur Aufnahme des Rollenhalters dazu ausgebildet, den Rollenhalter in unterschiedlichen X-Positionen relativ zum Bandkörper bzw. Rahmen aufzunehmen. Eine solche Ausnehmung könnte nach dem Nut-Feder-Prinzip gebildet werden durch ein sich in Längsrichtung X erstreckendes Langloch, in welches ein Abschnitt des Rollenhalters so einsetzbar ist, dass der Abschnitt und mit ihm der Rollenhalter entlang des Langlochs in X-Richtung verschieblich ist. Dadurch kann die X-Position der vom Rollenhalter aufgenommenen Rolle relativ zum Bandkörper eingestellt werden, um beispielsweise eine gewünschte Bandspannung zu erzielen. Bei geeigneter Form und Richtung der Ausnehmung behält die Rolle bzw. die Rollenachse ihre Y-Höhe unabhängig von der Verschiebeposition im Wesentlichen unverändert bei, vollführt also eine rein translatorische Bewegung ohne Verkippen.

Durch geeignete Befestigungsmittel, beispielsweise eine mit dem Rollenhalter und dem Rahmen zusammenwirkende Klemmschraube, durch Rastmittel oder andere Mittel zur Arretierung kann der Rollenhalter in der gewählten X-Position am Bandkörper fixiert werden. Bevorzugt sind die Befestigungsmittel ohne Werkzeug betätigbar, etwa als Flügelmutter oder manuell bedienbarer Rastmechanismus. Das am Beispiel des Langlochs beschriebene Nut-Feder-Prinzip kann selbstverständlich auch im Sinne einer kinematischen Umkehr dadurch realisiert werden, dass die Ausnehmung am Rollenhalter vorgesehen ist und mit einem geeigneten Vorsprung am Rahmen des Bandkörpers zusammenwirkt. Auch andere, dem Fachmann als solche geläufige Befestigungsmittel, mit denen zwei Komponenten in einer wählbaren Relativposition zueinander befestigbar sind, kommen grundsätzlich zur Anordnung des Rollenhalters am Bandkörper infrage.

Die Befestigung des Rollenhalters am Rahmen erfolgt bevorzugt ohne verliererbare Teile, beispielsweise mittels eines Klemm- oder Rastmechanismus, dessen Bestandteile stets mit dem Rahmen bzw. dem Rollenhalter verbunden bleiben. Dadurch wird verhindert, dass verlierbare und möglicherweise schwierig zu detektierende Kleinteile als Fremdkörper in die geförderten Produkte, insbesondere Lebensmittelprodukte, gelangen können.

Der Rollenhalter des Eingreifschutzes ist bevorzugt dazu ausgebildet, eine Rolle einseitig zu tragen bzw. zu lagern. Das bedeutet, dass ein die Rollenachse ausbildender Abschnitt (beispielsweise ein zylindrischer Zapfen) nur auf einer Seite der Rolle mit dem Rollenhalter verbunden ist, während die Rollenachse auf der anderen Seite nicht abgestützt wird. Dadurch vereinfacht sich die Aufhängung der Rolle, und auch ein Rollenwechsel ist einfacher durchführbar. Der die Rollenachse ausbildende Abschnitt kragt dazu in Querrichtung Y ein Stückchen hervor, und die Rolle kann auf diesen Abschnitt in Querrichtung Y aufgeschoben und erforderlichenfalls mit geeigneten Befestigungsmitteln gesichert werden.

Der einstückig mit dem Rollenhalter ausgebildete Eingreifschutz kann in Bezug auf eine die Rolle mittig teilende X-Z-Ebene (im Weiteren bezeichnet als "Rollenebene") auf verschiedene Weise mit dem Rollenhalter verbunden bzw. ausgebildet sein. In einer vorteilhaften Ausführungsform erstreckt sich ein mit einem Bandkörper verbindbarer Halteabschnitt auf einer Seite der Rollenebene in Förderrichtung X in Richtung auf das Bandende, wo das sich in Querrichtung Y erstreckende Schutzelement anschließt. Der Halteabschnitt dient zugleich als Rollenhalter, wobei ein vom Halteabschnitt in Querrichtung Y abragender Zapfen die Rollenachse bildet bzw. zur Aufnahme einer auf den Zapfen aufsteckbaren Rolle dient. Zugleich deckt der Halteabschnitt die Rolle auf dieser Seite der Rollenebene teilweise oder vollständig ab. Auf der dem Halteabschnitt gegenüberliegenden anderen Seite der Rollenebene ist die Rolle bzw. das Schutzelement des Eingreifschutzes in Querrichtung Y "offen", so dass insbesondere das Förderband in dieser Richtung bei Bedarf von der Rolle abgenommen werden kann. Der Halteabschnitt dient in dieser Ausführungsform mit einem dem Bandende abgewandten Abschnitt zur Befestigung am Bandkörper, während der sich zum Bandende hin erstreckende Abschnitt einerseits die Rolle trägt und andererseits im Bereich des Bandendes auch den Eingreifschutz mit seinem wenigstens einen Schutzelement ausbildet. Durch Lösen des Halteabschnitts von einem Bandkörper (etwa zu Wartungszwecken oder zur Einstellung der Bandspannung) wird somit der Rollenhalter und die Rolle gemeinsam mit dem Eingreifschutz gelöst und gegebenenfalls entfernt, wobei das Schutzelement seine Relativposition zur Rolle nicht ändert. Nach der erneuten Befestigung des Halteabschnitts mit Rolle und Schutzelement an einem Bandkörper ist das Schutzelement unverändert und automatisch im korrekten Abstand relativ zur Rolle bzw. zum Bandradius positioniert. Die Anordnung aus Halteabschnitt, Rollenhalter und Schutzelement ist einstückig ausgebildet, etwa aus einem stabilen Kunststoff oder aus Metall, insbesondere Aluminium oder Edelstahl.

Eine alternative Ausführungsform sieht vor, dass sich ein erster Halteabschnitt als Rollenhalter auf einer ersten Seite der Rollenebene erstreckt, während sich ein mit diesem ersten Halteabschnitt verbindbarer oder fest verbundener zweiter Halteabschnitt als Teil des Eingreifschutzes auf der zweiten Seite der Rollenebene bis zum Bandende erstreckt und dort das wenigstens eine Schutzelement trägt. Der die Rolle tragende erste Halteabschnitt kann die Rolle dabei auf der ersten Seite der Rollenebene teilweise oder ganz abdecken. Der auf der zweiten Seite der Rollenebene liegende zweite Halteabschnitt kann die Rolle auch auf dieser zweiten Seite teilweise oder vollständig abdecken, wobei er die Rolle dabei an wenigstens einer Stelle über den Bandradius hinaus überragt, um das in Querrichtung Y über die Bandoberfläche ragende Schutzelement zu tragen. Auch in dieser Variante ist der als Rollenhalter dienende erste Halteabschnitt einstückig mit dem zweiten Halteabschnitt bzw. dem Eingreifschutz und dessen Schutzelement ausgebildet, sodass die Wiederinbetriebnahme des Bandkörpers nur mit vorschriftsmäßig vorgesehenem Eingreifschutz möglich ist.

Zweckmäßigerweise ist der Eingreifschutz des erfindungsgemäßen Bandkörpers, zu einer der beiden Rollenseiten hin "offen" ausgebildet, so dass ein Förderband in Querrichtung Y von der Rolle abgezogen und entfernt werden kann (zur Reduzierung der Bandspannung kann der am Rahmen des Bandkörpers fixierbare Rollenhalter dazu bedarfsweise etwas gelockert oder auch vollständig entfernt werden).

Die einstückige Ausführung von Eingreifschutz und Rollenhalter (einteilige Lösung) bietet den besonderen Vorteil, dass keinerlei "zusätzliche" Befestigung zwischen diesen beiden Teilen erforderlich ist. Andernfalls erforderliche und möglicherweise verlierbare Befestigungsmittel, welche in die geförderten Produkte gelangen könnten, werden dadurch vorteilhaft vermieden. Zudem reduziert sich die Anzahl der Einzelteile, und auch der Zusammenbau bzw. die Wartung eines Bandförderers mit einem solchen Eingreifschutz wird einfacher.

Der Eingreifschutz des erfindungsgemäßen Bandkörpers wurde vorstehend anhand eines Bandkörpers beschrieben, bei dem ein Förderband um eine Rolle umgelenkt wird und wobei der Eingreifschutz im Bereich der Umlenkung einen Klemmspalt auf den zulässigen Restspalt reduziert. Sinngemäß gelten diese Merkmale bzw. Überlegungen jedoch auch für andere umlaufende Fördermittel, beispielsweise Ketten, (schmale) Riemen, Rundriemen, profilierte Bänder etc. Der Eingreifschutz kann vorteilhaft auch für Inspektionsgeräte, wie bspw. Waagen, Metalldetektoren, Röntgengeräte oder sonstige Messgeräte eingesetzt werden, die zum Transport von Produkten ausgebildet sind.

Nachfolgend soll eine Ausführungsform der Erfindung anhand verschiedener Figuren näher erläutert werden. Dabei zeigt
- Fig. 1: eine perspektivische Ansicht von vier Bandkörpern in einem Transportbandsystem;
- Fig. 2a, b: einen Eingreifschutz in zwei Ausgestaltungen
- Fig. 3a, b: die Varianten des Eingreifschutzes nach Fig. 2a, b, jeweils montiert an einem Bandkörper, und
- Fig. 4: einen Bandförderer mit einteiligem und zweiteiligem Eingreifschutz

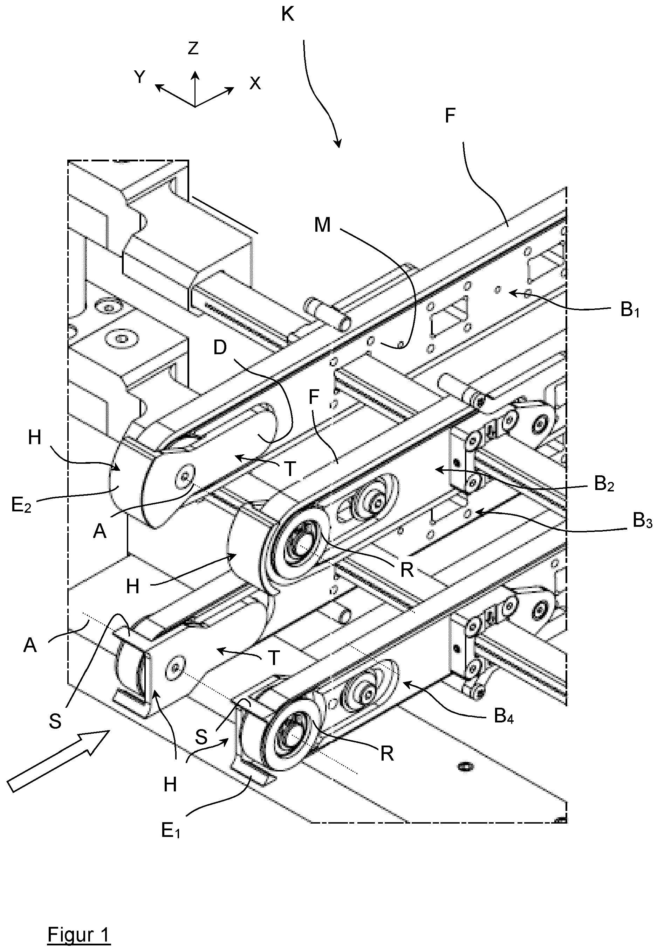

Der in Fig. 1 gezeigte Bandförderer K umfasst insgesamt vier Bandkörper B (B₁ - B₄), die sich jeweils in einer Förderrichtung X erstrecken und in Höhenrichtung Z übereinander bzw. in Querrichtung Y nebeneinander angeordnet sind, um Produkte zwischen den übereinanderliegenden Bandkörpern B₁, B₃ bzw. B₂, B₄ zu klemmen und dabei in Förderrichtung X zu fördern, die durch einen Pfeil angedeutet ist. Jeder Bandkörper wird im Wesentlichen gebildet durch einen Rahmen M, der in Fig. 1 nur für den Bandkörper B₁ näher bezeichnet ist. Jeder Bandkörper umfasst ferner ein Förderband F, welches an einem (in Bezug auf die Förderrichtung X) hinteren Ende des Bandkörpers B jeweils von einer Rolle R umgelenkt wird (eine am vorderen Ende jedes Bandkörpers angeordnete Rolle mit gleicher Funktion und vorzugsweise ebenfalls mit Eingreifschutz ist aus Gründen der besseren Übersicht nicht dargestellt). Jede Rolle R ist um eine in Querrichtung Y verlaufende Rollenachse A drehbar.

Die Förderbänder F der oberen beiden Bandkörper B₁, B₂ rotieren gegensinnig zu den in Höhenrichtung Z jeweils gegenüberliegenden unteren beiden Bandkörpern B₃, B₄, sodass ein in Förderrichtung X (in Fig. 1 von links unten) kommendes Produkt zwischen die Bandkörper B eingezogen und von ihnen in Förderrichtung X weiter gefördert werden kann.

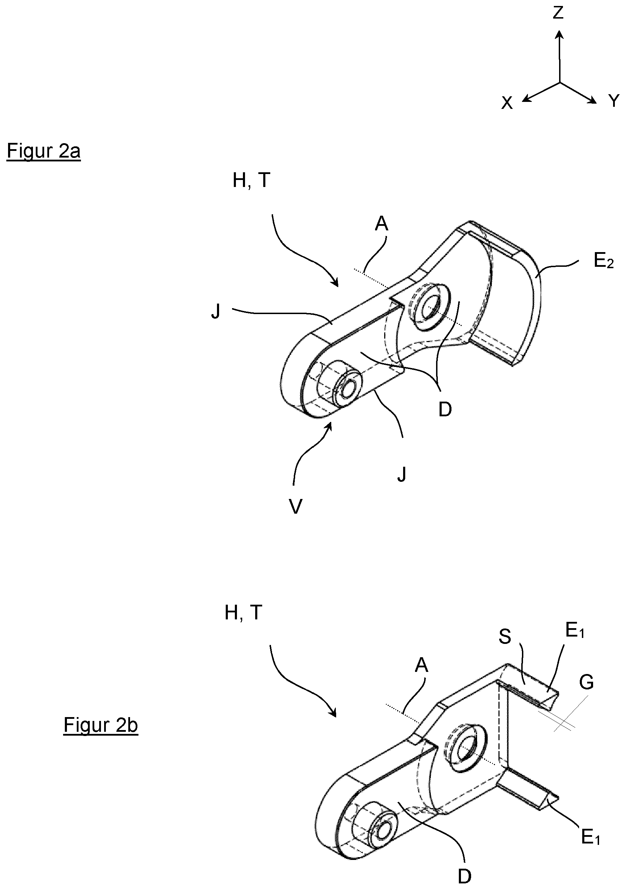

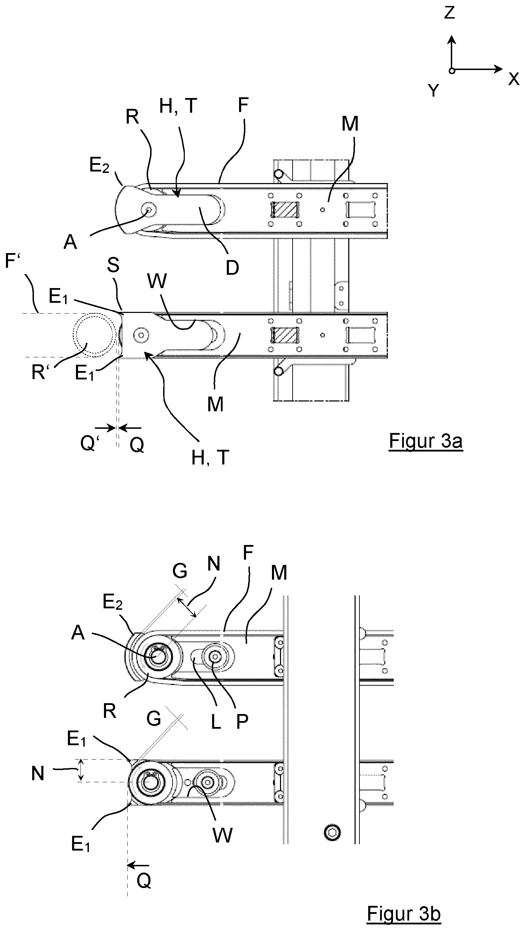

Jeder Bandkörper B trägt an seinem hinteren Ende jeweils einen Eingreifschutz H. Jeder Eingreifschutz umfasst ein oder zwei Schutzelemente E₁, E₂ (siehe auch Fig. 2 und 3), die sich in einem geringen Abstand zu dem von der Rolle R umgelenkten Förderband F in Querrichtung Y erstrecken. Dadurch bilden sie einen (insbesondere in Fig. 3 dargestellten) Restspalt G aus, der normenkonform kleiner gewählt ist als menschliche Gliedmaßen, insbesondere Finger. Der Eingreifschutz H verhindert, dass beispielsweise ein Finger in den Klemmspalt gelangt, der im Bereich einer Rolle R zwischen dem Förderband F und einem vom Bandförderer K eingezogenen Produkt gebildet wird. Der Eingreifschutz H ragt dazu mit seinem Schutzelement S in diesen potentiellen Klemmspalt hinein und füllt ihn aus.

Der Eingreifschutz H des oberen Bandkörpers B₁ umfasst ein schalenförmiges Schutzelement E₂, welches einstückig an einen Halteabschnitt D angeformt ist. Der Halteabschnitt D erstreckt sich in Förderrichtung X seitlich an der Rolle R vorbei und ist an einem dem Schutzelement E₂ abgewandten Ende am Rahmen R des Bandkörpers B₁ befestigt. Auch die (am ersten Bandkörper nur schlecht zu sehende) Rolle R wird von dem auch als Rollenhalter T dienenden Halteabschnitt D getragen und relativ zum Rahmen M des Bandkörpers B₁ positioniert. Der einstückig mit dem Rollenhalter T ausgebildete Eingreifschutz H lässt sich in (negativer) Querrichtung Y, in Fig. 1 also nach unten rechts, aus dem Rahmen M herausnehmen bzw. in umgekehrter Richtung einsetzen. (Die Anordnung des Eingreifschutzes H an dem dem ersten Bandkörper B₁ in Querrichtung gegenüberliegenden zweiten Bandkörper B₂ ist spiegelsymmetrisch zum ersten Bandkörper gewählt, die vorstehenden Ausführungen bezüglich des ersten Bandkörpers B₁ gelten sinngemäß genauso).

Die beiden unteren Bandkörper B₃, B₄, die bezüglich ihres jeweiligen Eingreifschutzes wieder spiegelsymmetrisch zueinander ausgebildet sind, tragen an ihrem hinteren Ende ebenfalls jeweils einen Eingreifschutz H. Jeder Eingreifschutz weist dabei zwei in Höhenrichtung Z voneinander beabstandete, jeweils in Querrichtung Y frei auskragende, stegartige Schutzelemente E₁ auf, deren Eigenschaften weiter unten näher erläutert werden sollen. Im Übrigen ist die Gestaltung des Eingreifschutzes H der unteren Bandkörper B₃, B₄ analog zu derjenigen der oberen Bandkörper B₁, B₂ gewählt. Entsprechend sind die Schutzelemente E₁ jedes Eingreifschutzes H über einen zugleich als Rollenhalter T dienenden (und hier nicht näher bezeichneten) Halteabschnitt am Rahmen des jeweiligen Bandkörpers B₃, B₄ befestigt.

Fig. 2a zeigt in vereinfachter perspektivischer Darstellung einen einteiligen Eingreifschutz H, wie er in Fig. 1 an den beiden oberen Bandkörpern B₁, B₂ vorgesehen ist. Ein schalenförmig ausgebildetes Schutzelement E₂ erstreckt sich entlang eines Kreisbogens um die Rollenachse A einer von dem Schutzelement noch aufzunehmenden Rolle R. Es kragt dabei, ausgehend von einem sich in X-Richtung erstreckenden Halteabschnitt D, frei in Querrichtung Y hervor. Die Breite des Schutzelements E₂ ist dabei so gewählt, dass die noch einzusetzende Rolle R und das Band F in Querrichtung Y vollständig überdeckt werden. Der Halteabschnitt D ist zugleich Rollenhalter T und weist im Bereich der Rollenachse A eine etwa dem Rollendurchmesser entsprechende Vertiefung auf, um die Rolle darin aufnehmen zu können. An seinem dem Schutzelement abgewandten Ende ist der Halteabschnitt D mit Verbindungsmitteln V ausgestattet, mit denen er am Rahmen M eines Bandkörpers B befestigbar ist.

Im Bereich der Verbindungsmittel V ist der Halteabschnitt D mit zwei zueinander parallelen Führungsflächen J ausgestattet. Eine in dem Rahmen eines Bandkörpers B vorgesehene Ausnehmung weist dafür zwei komplementär zu den beiden Führungsflächen J angeordnete, einander in Höhenrichtung Z gegenüberliegende Anschlagflächen W auf, welche den Halteabschnitt D in eingesetztem Zustand relativ zum Rahmen M in Förderrichtung X passgenau führen und zugleich die Einstellung einer X-Position des Halteabschnitts D relativ zum Rahmen ermöglichen. Die vom Halteabschnitt D aufzunehmende Rolle R kann dadurch in eine für die erforderliche Bandspannung geeignete X-Position entlang des Rahmens M verschoben und durch Nutzung der Verbindungsmittel V fixiert werden. Das einstückig am Halteabschnitt D angeformte Schutzelement E₂ vollzieht diese Bewegung ebenfalls, sodass der Abstand des Schutzelements E₂ zu dem von der Rolle R getragenen Band F bzw. zur Rollenachse A unverändert bleibt.

Fig. 2b zeigt den an den unteren Bandkörpern B₃, B₄ gemäß Fig. 1 angeordneten, ebenfalls einteiligen Eingreifschutz H. Während die Ausführungen zur Gestaltung und Funktion des Halteabschnitts D analog zu denen bezüglich Fig. 2a zu verstehen sind, unterscheidet sich der Eingreifschutz bezüglich der Ausbildung seiner Schutzelemente. Zwei stegförmige Schutzelemente E₁ erstrecken sich, in Höhenrichtung Z zueinander beanstandet, parallel zueinander und frei vom Halteabschnitt D auskragend, in Querrichtung Y. Auch hier wird die Y-Breite der Schutzelemente nach Maßgabe der Y-Breite der vom Halteabschnitt D aufzunehmenden Rolle R bzw. des von ihr getragenen Förderbandes F gewählt. Der Zwischenraum zwischen dem oberen und unteren Schutzelement E₁ bleibt frei, sodass die Rolle R oder zumindest das von ihr umgelenkte Förderband F in diesen Zwischenraum hinein oder hindurch ragen kann. Zwischen dem in Fig. 2b nicht dargestellten und von der Rolle R umgelenkten Förderband F und der der Rollenachse A zugewandten Fläche des Schutzelements E₁ wird der zuvor bereits beschriebene Restspalt G ausgebildet.

Jedes Schutzelement E₁ weist eine als Stützfläche S dienende Oberseite auf, die sich jeweils in einer X-Y-Ebene erstreckt. Die Lage der Stützflächen S relativ zur Rollenachse A ist so gewählt, dass ein am Bandkörper angeordneter Eingreifschutz H mit der Stützfläche S des oben liegenden Schutzelements E₁ eine Verlängerung der Förderebene erzeugt, welche durch die Oberseite des Förderbandes F entlang des Bandkörpers B definiert wird. Der als Bandradius N definierte Abstand der Stützflächen S zur Rollenachse in Höhenrichtung Z ergibt sich aus der Summe von Rollenradius und Z-Dicke des Förderbandes F (siehe hierzu auch Fig. 3a und 3b).

Denkbar ist es aber auch, auf die Funktion der Stützflächen zu verzichten, da Produkte möglicherweise mit einem bis an die Höhe der Förderebene heranreichenden Schutzelement verkanten könnten. In diesem Fall wird die Lage der Fläche S in Z-Richtung bewusst etwas tiefer gewählt als die der Förderebene, so dass die Produkte sich weitgehend berührungslos über das Schutzelement hinweg bewegen können und dieses nur als reiner Eingreifschutz wirkt.

Der Eingreifschutz gemäß Fig. 2a und 2b ist jeweils symmetrisch zu einer die Rollenachse A enthaltenden X-Y-Ebene ausgebildet. Wie Fig. 1 verdeutlicht, ist ein solcher Eingreifschutz vorteilhaft dazu ausgebildet, wahlweise von der einen oder (dann um 180° verdreht) von der anderen Seite, bzw. in oder entgegen der Querrichtung Y, in den Rahmen M eines Bandkörpers eingesetzt zu werden, wobei sich das jeweils frei auskragende Schutzelement dann in bzw. entgegen der Querrichtung Y erstreckt.

Die Figuren 3a und 3b zeigen in vereinfachter Seitenansicht (mit Blick in Querrichtung Y) die bereits in Fig. 1 gezeigte Anordnung der verschiedenen Eingreifschutze bzw. Schutzelemente E₁ und E₂. Auf die dortigen Ausführungen wird hinsichtlich der bereits vorgestellten Elemente verwiesen. Zu sehen ist, dass die schalenförmigen Schutzelemente E₂ sich in X-Richtung über das hintere Bandende Q hinaus erstrecken und die Rolle R dabei auch auf Höhe der Rollenachse A umlaufen. Dadurch wird neben einem Eingreifschutz auch ein besonders guter Schutz der Rolle R vor Beschädigung oder Verschmutzung erreicht.

Ein Eingreifschutz H, der stattdessen mit Schutzelementen des Typs E₁ ausgestattet ist, ermöglicht die Anordnung eines in X-Richtung an den Bandkörper anschließenden weiteren Bandkörpers (mit einer Rolle R', einem Förderband F' sowie einem Bandende Q') derart, dass die dann zueinander benachbarten Bandenden Q, Q' beider Bandkörper möglichst nah aneinander liegen, um einen Übergabespalt möglichst klein zu halten. Das Förderband F mit seinem Bandende Q ragt dabei in den zwischen den Schutzelementen E₁ gebildeten Zwischenraum in X-Richtung hinein bzw. hindurch.

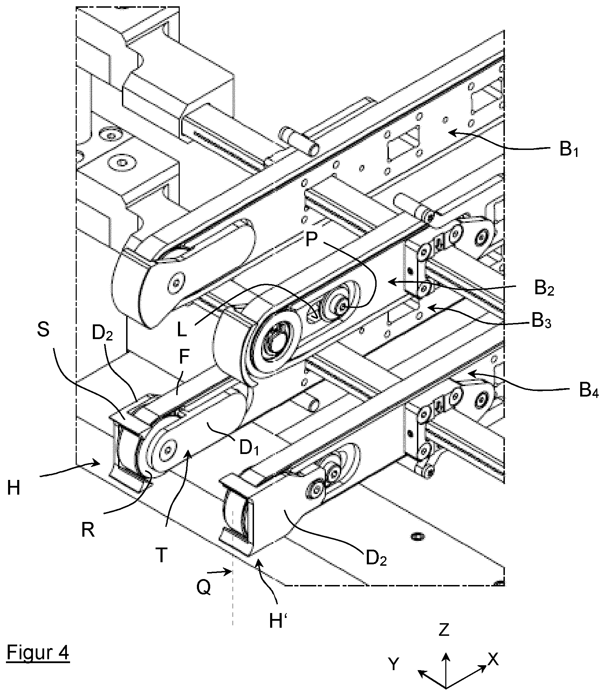

Fig. 4 zeigt im unteren Abschnitt zwei Bandkörper B₃, B₄ in Teilansicht, deren Eingreifschutz H' zweiteilig und damit anders ausgebildet ist als in Fig. 1 und damit nicht erfindungsgemäß (die beiden oberen Bandkörper B₁, B₂ dagegen sind diesbezüglich identisch zu Fig. 1). Im unteren Teil der Fig. 4 erstreckt sich ein erster Halteabschnitt D₁, der am Rahmen M befestigbar ist, auf einer ersten Seite der Rolle R in Richtung auf das hintere Ende des Bandkörpers. Dieser Halteabschnitt D₁ dient allerdings auf dieser ersten Seite des Rahmens bzw. der

Rolle R nur als Rollenhalter für die Rolle R und erstreckt sich in X-Richtung nicht über das Bandende hinaus. Er bildet einen ersten Teil des zweiteiligen Eingreifschutzes H'. Auf der gegenüberliegenden Seite der Rolle R erstreckt sich ein mit dem ersten Halteabschnitt D₁ verbindbarer zweiter Halteabschnitt D₂ als zweiter Teil des zweiteiligen Eingreifschutzes H' so weit über den Bandradius hinaus, dass dort die bereits erläuterten Schutzelemente E₁ zur Bildung des Spalts G in Querrichtung Y über das von der Rolle R umgelenkte Förderband herüberkragen können. Zwischen dem ersten Halteabschnitt D₁ und beiden Schutzelementen E₁ (siehe hierzu wieder analog Fig. 3b) verbleibt ein Spalt, durch den bei Bedarf das Förderband F in Querrichtung Y von der Rolle R abgezogen werden könnte.

In diesem nicht erfindungsgemäßen Beispiel ließe sich der zweite Halteabschnitt D₂ mit den den eigentlichen Eingreifschutz bildenden Schutzelementen E₁ vom ersten Halteabschnitt D₁ lösen und gegebenenfalls austauschen. Durch Lösen des ersten Halteabschnitts D₁ vom Rahmen M werden neben der Rolle R auch der zweite Halteabschnitt D₂ und mit ihm die den eigentlichen Eingreifschutz bildenden Schutzelemente E₁ gemeinsam vom Bandkörper gelöst, um beispielsweise das Förderband zu wechseln oder sonstige Wartungsaufgaben zu übernehmen. Die Wiederinbetriebnahme des Bandkörpers ist nur nach erneuter Befestigung des Rollenhalters (und der damit gleichzeitig erfolgenden Anordnung des Eingreifschutzes am Bandkörper) möglich.

### Bezugszeichen

- A: Rollenachse
- B, B₁, B₂, B₃, B₄: Bandkörper
- D₁, D₂: Halteabschnitt
- E, E₁, E₂: Schutzelement
- F: Förderband
- G: Restspalt
- H: Eingreifschutz
- J: Führungsflächen
- K: Bandförderer
- L: Langloch
- M: Rahmen
- N: Bandradius
- P: Schaft
- Q: Bandende
- R: Rolle
- S: Stützfläche
- T: Rollenhalter
- V: Verbindungsmittel
- X: Förderrichtung
- W: Anschlagfläche
- Y: Querrichtung
- Z: Höhenrichtung

## Patentansprüche

1. Bandkörper (B) mit wenigstens einem Eingreifschutz (H) zur Abdeckung eines zwischen zwei Komponenten gebildeten Klemmspalts,
a) wobei eine der Komponenten ein Förderband (F) eines Bandförderers (K) ist, der sich entlang einer Förderrichtung (X), einer dazu orthogonal verlaufenden Querrichtung (Y) und einer zu beiden Richtungen (X, Y) orthogonal verlaufenden Höhenrichtung (Z) erstreckt,
b) und wobei das Förderband (F) von einer mittels einem Rollenhalter (T) an dem Bandkörper (B) des Bandförderers (K) befestigten Rolle (R) umgelenkt wird, die um eine in Querrichtung (Y) verlaufende Rollenachse (A) drehbar ist,
c) wobei der Bandkörper (B) einen Rahmen umfasst zur Befestigung des Rollenhalters (T), und wobei sich der Rahmen zwischen zwei in Förderrichtung X voneinander beabstandeten Rollen erstreckt, die jeweils zur Umlenkung des Förderbandes dienen,
d) wobei der Eingreifschutz (H) einstückig mit dem Rollenhalter (T) ausgebildet ist, und
dadurch gekennzeichnte, dass
e) der Rollenhalter einen in Querrichtung (Y) ausgebildeten Vorsprung aufweist, der in Querrichtung (Y) in eine dazu komplementär ausgebildete Ausnehmung im Rahmen, einsetzbar ist.

2. Bandkörper (B) nach Anspruch 1, **dadurch gekennzeichnet, dass** der Eingreifschutz wenigstens einen Halteabschnitt (D₁, D₂) aufweist, der sich im befestigten Zustand seitlich neben der Rolle (R) in Förderrichtung (X) erstreckt, um den einstückig mit dem Rollenhalter (T) ausgebildeten Eingreifschutz (H) am Bandkörper (B) zu befestigen.

3. Bandkörper (B) nach einem der vorigen Ansprüche, **dadurch gekennzeichnet, dass** der Eingreifschutz (H) wenigstens ein sich in Querrichtung (Y) erstreckendes Schutzelement (E₁, E₂) umfasst zur Ausbildung eines radialen Restspalts (G) vorgebbarer Größe zwischen dem Schutzelement (E₁, E₂) und dem die Rolle (R) umlaufenden Förderband (F).

4. Bandkörper (B) nach dem vorhergehenden Anspruch, **dadurch gekennzeichnet, dass** sich ein dem Förderband (F) zugewandter Abschnitt des Schutzelements (E₂) entlang eines Kreisbogens um die Rollenachse (A) erstreckt.

5. Bandkörper (B) nach Anspruch 3 oder 4, **dadurch gekennzeichnet, dass** ein Abschnitt des Schutzelements (E₁, E₂) eine sich in Förderrichtung (X) und in Querrichtung (Y) erstreckende Stützfläche (S) aufweist, um eine Fortsetzung einer vom Förderband (F) gebildeten Förderebene auszubilden.

6. Bandkörper (B) nach einem der Ansprüche 3 bis 5, **dadurch gekennzeichnet, dass** das Schutzelement (E₁, E₂) in Querrichtung (Y) modular erweiterbar ist, um den Restspalt (G) bei variierender Förderband- oder Rollenbreite über die ganze Förderband- oder Rollenbreite auszubilden zu können.

7. Bandkörper (B) nach einem der Ansprüche 3 bis 6, **dadurch gekennzeichnet, dass** das Schutzelement (E₁, E₂), ausgehend von einem Halteabschnitt (D), zur Ausbildung des Restspalts (G) in Querrichtung (Y) frei über die Rolle (R) auskragt, um das Förderband (F) auf der dem Halteabschnitt (D₁, D₂) in Querrichtung (Y) gegenüberliegenden Seite der Rolle (R) aus einem Spalt zwischen Rolle (R) und Schutzelement (E₁, E₂) entnehmen zu können.

8. Bandkörper (B) nach einem der vorigen Ansprüche, **dadurch gekennzeichnet, dass** der Eingreifschutz (H) im Wesentlichen symmetrisch zu einer in X-Y-Richtung ausgerichteten, vorzugsweise die Rollenachse (A) enthaltenden Symmetrieebene ausgebildet ist.

9. Bandkörper (B) nach einem der vorigen Ansprüche, **dadurch gekennzeichnet, dass** der Rollenhalter (T) eine Rolle (R) einseitig lagert.

10. Bandkörper (B) nach einem der vorigen Ansprüche, **dadurch gekennzeichnet, dass** der Rollenhalter (T) in Längsrichtung (X) an unterschiedlichen X-Positionen relativ zum Bandkörper (B), vorzugsweise stufenlos, fixierbar ist, um die Bandspannung einstellen zu können.

11. Bandkörper nach einem der vorigen Ansprüche, **dadurch gekennzeichnet, dass** der Eingreifschutz (H) werkzeuglos und/oder ohne verlierbare Teile vom Bandkörper (B) lösbar ist.

12. Inspektionsgerät, insbesondere Waage, mit wenigstens einem Bandkörper (B) nach einem der vorigen Ansprüche.

## Claims

1. Band body (B) having at least one pinch protection means (H) for covering a clamping gap formed between two components,
a) one of the components being a conveyor belt (F) of a belt conveyor (K) which extends in a conveying direction (X), a transverse direction (Y) orthogonal to the conveying direction and a vertical direction (Z) orthogonal to the two directions (X, Y),
b) and the conveyor belt (F) being deflected by a roller (R) which is attached to the band body (B) of the belt conveyor (K) by means of a roller holder (T) and can be rotated about a roller axis (A) extending in the transverse direction (Y),
c) the band body (B) comprising a frame for attaching the roller holder (T), and the frame extending between two rollers which are spaced apart from one another in the conveying direction X and each have the purpose of deflecting the conveyor belt,
d) the pinch protection means (H) being formed integrally with the roller holder (T), and
**characterized in that**
e) the roller holder has a projection which is formed in the transverse direction (Y) and can be inserted in the transverse direction (Y) into a recess in the frame formed to complement the projection.

2. Band body (B) according to claim 1, **characterized in that** the pinch protection means has at least one holding portion (D₁, D₂) which, in the attached state, extends laterally next to the roller (R) in the conveying direction (X) in order to attach the pinch protection means (H) formed integrally with the roller holder (T) to the band body (B).

3. Band body (B) according to either of the preceding claims,
**characterized in that** the pinch protection means (H) comprises at least one protective element (E₁, E₂) which extends in the transverse direction (Y) to form a radial residual gap (G) of a predefinable size between the protective element (E₁, E₂) and the conveyor belt (F) which circulates the roller (R).

4. Band body (B) according to the preceding claim, **characterized in that** a portion of the protective element (E₂) which faces the conveyor belt (F) extends along a circular arc about the roller axis (A).

5. Band body (B) according to claim 3 or claim 4, **characterized in that** a portion of the protective element (E₁, E₂) has a support surface (S) which extends in the conveying direction (X) and in the transverse direction (Y) in order to form a continuation of a conveying plane formed by the conveyor belt (F).

6. Band body (B) according to any of claims 3 to 5, **characterized in that** the protective element (E₁, E₂) can be modularly extended in the transverse direction (Y) so that the residual gap (G) can be formed over the entire conveyor belt width or roller width if the conveyor belt width or roller width varies.

7. Band body (B) according to any of claims 3 to 6, **characterized in that** the protective element (E₁, E₂), starting from a holding portion (D), projects freely over the roller (R) in the transverse direction (Y) to form the residual gap (G) so that the conveyor belt (F) can be removed from a gap between the roller (R) and the protective element (E₁, E₂) on the side of the roller (R) opposite the holding portion (D₁, D₂) in the transverse direction (Y).

8. Band body (B) according to any of the preceding claims,
**characterized in that** the pinch protection means (H) is formed substantially symmetrically to a plane of symmetry which is oriented in the XY direction and preferably contains the roller axis (A).

9. Band body (B) according to any of the preceding claims,
**characterized in that** the roller holder (T) mounts a roller (R) on one side.

10. Band body (B) according to any of the preceding claims,
**characterized in that** the roller holder (T) can be secured in the longitudinal direction (X) at different X positions relative to the band body (B), preferably steplessly, so that the belt tension can be adjusted.

11. Band body according to any of the preceding claims, **characterized in that** the pinch protection means (H) can be detached from the band body (B) without tools and/or without losable parts.

12. Inspection device, in particular a scale, having at least one band body (B) according to any of the preceding claims.

## Revendications

1. Corps de bande (B) comportant au moins une protection contre la pénétration (H) pour recouvrir un interstice de serrage formé entre deux composants,
a) dans lequel l'un des composants est une bande transporteuse (F) d'un convoyeur à bande (K) qui s'étend le long d'une direction de transport (X), d'une direction transversale (Y) qui lui est orthogonale et d'une direction de hauteur (Z) qui est orthogonale aux deux directions (X, Y),
b) et dans lequel la bande transporteuse (F) est déviée par un rouleau (R) fixé au corps de bande (B) du transporteur à bande (K) par le biais d'un support de rouleau (T), lequel rouleau peut tourner autour d'un axe de rouleau (A) s'étendant dans la direction transversale (Y),
c) dans lequel le corps de bande (B) comprend un cadre pour la fixation du support de rouleau (T), et dans lequel le cadre s'étend entre deux rouleaux espacés l'un de l'autre dans la direction de transport X, qui servent chacun à dévier la bande transporteuse,
d) dans lequel la protection contre la pénétration (H) est réalisée d'un seul tenant avec le support de rouleau (T), et
**caractérisé en ce que**
e) le support de rouleau présente une saillie réalisée dans la direction transversale (Y), qui peut être insérée dans la direction transversale (Y) dans un évidement réalisé de manière complémentaire dans le cadre.

2. Corps de bande (B) selon la revendication 1, **caractérisé en ce que** la protection contre la pénétration présente au moins une section de maintien (D₁, D₂) qui, à l'état fixé, s'étend latéralement à côté du rouleau (R) dans la direction de transport (X), afin de fixer la protection contre la pénétration (H), réalisée d'un seul tenant avec le support de rouleau (T), sur le corps de bande (B).

3. Corps de bande (B) selon l'une des revendications précédentes, **caractérisé en ce que** la protection contre la pénétration (H) comprend au moins un élément de protection (E₁, E₂) s'étendant dans la direction transversale (Y) pour réaliser une fente résiduelle radiale (G) de taille prédéfinissable entre l'élément de protection (E₁, E₂) et la bande transporteuse (F) circulant autour du rouleau (R).

4. Corps de bande (B) selon la revendication précédente,
**caractérisé en ce qu'**une section de l'élément de protection (E₂) orientée vers la bande transporteuse (F) s'étend le long d'un arc de cercle autour de l'axe de rouleau (A).

5. Corps de bande (B) selon la revendication 3 ou 4,
**caractérisé en ce qu'**une section de l'élément de protection (E₁, E₂) présente une surface d'appui (S) s'étendant dans la direction de transport (X) et dans la direction transversale (Y), afin de réaliser un prolongement d'un plan de transport formé par la bande transporteuse (F).

6. Corps de bande (B) selon l'une des revendications 3 à 5,
**caractérisé en ce que** l'élément de protection (E₁, E₂) est extensible de manière modulaire dans la direction transversale (Y), afin de pouvoir réaliser la fente résiduelle (G) sur toute la largeur de la bande transporteuse ou du rouleau en cas de variation de la largeur de la bande transporteuse ou du rouleau.

7. Corps de bande (B) selon l'une des revendications 3 à 6,
**caractérisé en ce que** l'élément de protection (E₁, E₂), partant d'une section de maintien (D), est en porte-à-faux libre au-dessus du rouleau (R) pour réaliser la fente résiduelle (G) dans la direction transversale (Y), afin de pouvoir retirer la bande transporteuse (F) d'une fente entre le rouleau (R) et l'élément de protection (E₁, E₂) sur le côté du rouleau (R) opposé à la section de maintien (D₁, D₂) dans la direction transversale (Y).

8. Corps de bande (B) selon l'une des revendications précédentes, **caractérisé en ce que** la protection contre la pénétration (H) est réalisée de manière sensiblement symétrique par rapport à un plan de symétrie orienté dans la direction X-Y, contenant de préférence l'axe de rouleau (A).

9. Corps de bande (B) selon l'une des revendications précédentes, **caractérisé en ce que** le support de rouleau (T) supporte un rouleau (R) sur un côté.

10. Corps de bande (B) selon l'une des revendications précédentes, **caractérisé en ce que** le support de rouleau (T) peut être fixé dans la direction longitudinale (X) à différentes positions X par rapport au corps de bande (B), de préférence en continu, afin de pouvoir régler la tension de la bande.

11. Corps de bande selon l'une des revendications précédentes, **caractérisé en ce que** la protection contre la pénétration (H) peut être détachée du corps de bande (B) sans outil et/ou sans pièces perdables.

12. Appareil d'inspection, en particulier balance, comportant au moins un corps de bande (B) selon l'une des revendications précédentes.
